# EUROPÄISCHE PATENTSCHRIFT

(11) **EP 0 805 539 B1**
(45) Veröffentlichungstag und Bekanntmachung des Hinweises auf die Patenterteilung: **12.05.1999**
(21) Anmeldenummer: 96110589.7
(22) Anmeldetag: 01.07.1996
(51) Int. Cl.: H02H 7/22, H01B 9/02

(54) **Schaltungsanordnung für ein Hochspannungsdrehstromkabel**
Circuit for three-phase power cable
Circuit pour câble de puissance triphasé

(30) Priorität: 02.05.1996 DE 19617485
(43) Veröffentlichungstag der Anmeldung: 05.11.1997
(73) Patentinhaber: Felten & Guilleaume AG, 51063 Köln (DE)
(72) Erfinder: Rasquin, Werner, 50668 Köln (DE)

(56) Entgegenhaltungen:
- US-A- 4 464 583
- CIGRE. PROCEEDINGS OF THE 32ND SESSION. INTERNATIONAL CONFERENCE ON LARGE HIGH VOLTAGE ELECTRIC SYSTEMS, PARIS, FRANCE, 28 AUG.-3 SEPT. 1988, 1988, PARIS, FRANCE, CIGRE, FRANCE, Seiten 21-04/1-5 vol.1, XP000041993 LEUFKENS P P ET AL: "Cross bonding and a special interruption joint for HV XLPE cable in relation with the use of metal oxide surge arresters"

## Beschreibung

Die Erfindung betrifft eine Schaltungsanordnung nach dem Oberbegriff des Hauptanspruchs (Crossbonding-Beschaltung).

Weitere Details zur Crossbonding-Beschaltung können folgendem Dokument entnommen werden: CIGRE. PROCEEDINGS OF THE 32ND SESSION. INTERNATIONAL CONFERENCE ON LARGE HIGH VOLTAGE ELECTRIC SYSTEMS, 28 AUG.-3 SEPT. 1988, PARIS, FRANCE Seiten 21-04/1-5 vol.1, LEUFKENS P P ET AL: "Cross bonding and a special interruption joint for HV XLPE cable in relation with the use of metal oxide surge arresters".

Bei Spannungsüberhöhungen, beispielsweise durch Resonanzerscheinungen, kann es zu Kurzschlüssen kommen, bei denen einige oder auch alle nichtlinearen Schutzwiderstände der Crossbonding-Beschaltung wegen zu hoher Energieaufnahme zerstört werden können. Im folgenden werden die Punkte in einer Crossbonding-Beschaltung, an denen nichtlineare Schutzwiderstände liegen, mit Knotenpunkte bezeichnet. Durch eine Parallelschaltung einer oder mehrerer Widerstände zu einem durch Überstrom gefährdeten Widerstand kann normalerweise ein Widerstand geschützt werden, weil nicht mehr der Gesamtstrom durch den einen Widerstand fließt, sondern durch die Stromaufteilung nur noch ein Teil. Diese Maßnahme der Stromaufteilung ist für nichtlineare Widerstände und damit für eine Crossbonding-Beschaltung nicht geeignet, da auch nur kleinste Unterschiede in der Ansprechspannung bewirken, daß derjenige Widerstand mit der kleinsten Ansprechspannung den gesamten Strom übernimmt und zerstört wird, ohne daß die parallel geschalteten Widerstände merklich Strom führen.

Mit der Erfindung soll eine Schaltungsanordnung angegeben werden, die im Falle von Spannungsüberhöhungen Schäden an nichtlinearen Schutzwiderständen einer Crossbonding-Beschaltung abwendet bzw. verringert.

Die Lösung findet sich in den Merkmalen des Hauptanspruchs. Vorteilhafte Weiterbildungen sind in den Unteransprüchen angegeben.

Der entscheidende Vorschlag liegt darin, eine Art 'Energieumlenkung' vorzusehen, durch die eine teilweise Energiefortleitung an den Knotenpunkten stattfindet. Bei der Aufteilung ist wesentlich, daß eine zeitliche Verzögerung der Stromzufuhr zu den zusätzlichen nichtlinearen Widerständen stattfindet. Diese Lösung hat den Vorteil, daß die Schaltung nicht mit primären nichtlinearen Widerständen versehen werden muß, die für die maximal mögliche Leistung ausgelegt sind. Das Leistungsvermögen ist nicht beliebig steigerbar. Sollte die schützende Wirkung der Widerstände auch in den seltenen Fällen zum Tragen kommen, in denen eine kritische Spannungsüberhöhung auftritt, müßten sie überdimensioniert werden. Durch die geeignete Verwendung einiger Bauelemente gemäß der Erfindung - die zum weiteren auch nur verringertes Energieaufnahmevermögen haben können - entsteht auf jeden Fall ein Kostenvorteil.

Der Wellenwiderstand des Verzögerungsglieds hat entscheidenden Einfluß auf die Energieumlenkung. Für den einfachen Fall, in dem als Verzögerungsglied eine Verzögerungsleitung eingesetzt wird, heißt dies, daß die Länge der Leitung und/oder ihr Wellenwiderstand wesentlich sind.

Je mehr Energie vom primären nichtlinearen Widerstand ferngehalten werden soll, desto kleiner müssen der oder die Wellenwiderstände der Verzögerungsleitung sein oder umso mehr parallel liegende Verzögerungsleitungen müssen vorgesehen werden.

Die charakteristische Größe der Verzögerung (z.B. die Länge der Verzögerungsleitung) hat einen spürbaren Einfluß auf die Energieaufteilung. Ist nämlich die Verzögerung (Länge der Leitung) Null, geht die gesamte Energie in den oder die sekundären Widerstände am Knotenpunkt. Ist aber die Verzögerung unendlich groß, geht keine Energie in die Zusatzwiderstände.

In jedem Knotenpunkt sind jeweils eine oder mehrere Verzögerungsleitungen angeschaltet, an deren abgewandten Enden jeweils ein spannungsbegrenzendes Bauelement gegen Masse geschaltet ist, wobei die Ansprechspannung der weiteren spannungsbegrenzenden Bauelemente und/oder der Wellenwiderstand der jeweils zugehörigen Verzögerungsglieder so groß wie die Ansprechspannung des primären Widerstands und/oder der Wellenwiderstand der jeweils zugehörigen Verzögerungsglieder untereinander gleich groß gewählt werden kann. Günstiger ist es jedoch, die Ansprechspannung der weiteren spannungsbegrenzenden Bauelemente kleiner als die des primären Widerstands zu wählen. Die optimale Lösung wird durch geeignete Kombination der vier Parameter Ansprechspannung, Wellenwiderstand und Laufzeit eines Verzögerungsglieds und Zahl der Verzögerungsleitungen gefunden.

Beispielsweise kann bei einer Crossbonding-Beschaltung mit primären nichtlinearen Widerständen mit 11 kV Ansprechspannung die Ansprechspannung des ersten weiteren nichtlinearen Widerstands auf 9 kV und die des zweiten weiteren nichtlinearen Widerstands auf 7 kV reduziert werden. Der Wellenwiderstand der zugehörigen Leitungen kann untereinader gleich oder auch im Verhältnis wie die Leistungsaufnahme der Widerstände gestaffelt verringert werden.

Eine als Verzögerungsglied eingesetzte Leitung sollte vorzugsweise so ausgelegt sein, daß sie eine Länge im Bereich von 1 bis 10 Metern und einen Wellenwiderstand von 20 bis 150 Ohm/m hat.

Als spannungsbegrenzende Bauelemente können die bekannten ZinkOxid-Widerstände gewählt werden.

Die Erfindung ist in zwei Figuren dargestellt. Es zeigen
Fig. 1 die Schaltungsanordnung und
Fig. 2 die Verhältnisse der Energieaufnahme.

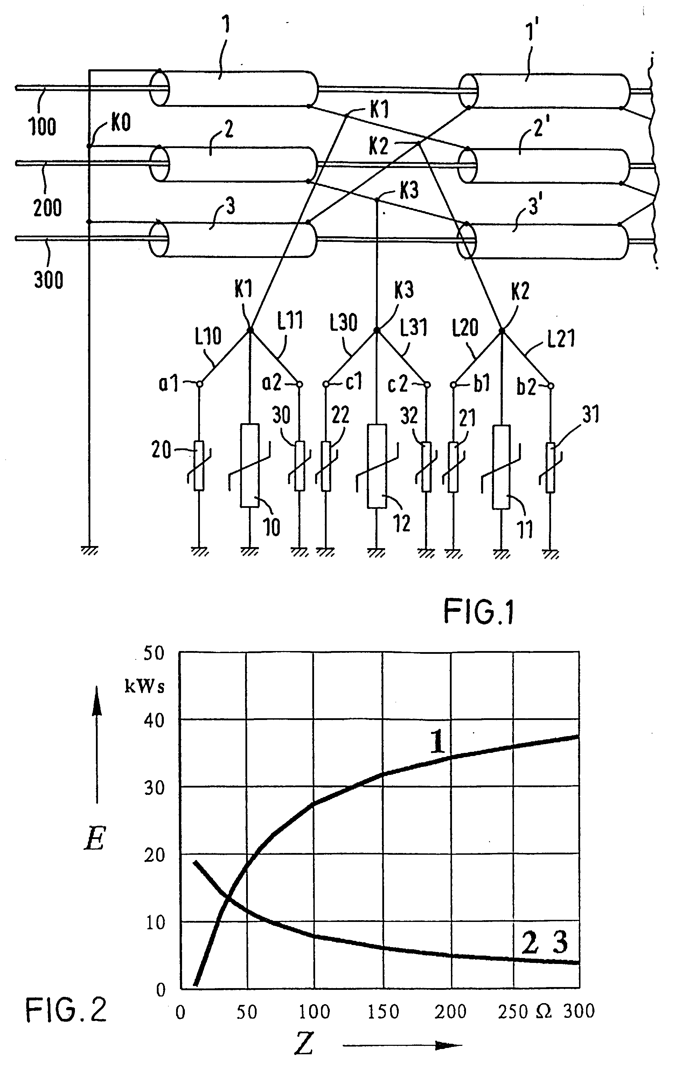

Fig. 1 zeigt schematisch ein Drehstromkabel mit seinen drei Leitern 100,200,300. Am Punkt K0 sind die Schirme 1,2,3 geerdet. Die Schirme 1,2, 3 und 1',2',3' sind ausgekreuzt miteinander verbunden. An den Knotenpunkten K1,K2,K3 sind nichtlineare Widerstände 10,11,12 gegen Masse hinzugeschaltet. An den Knotenpunkten K1,K2,K3 steht bei Spannungsüberhöhung die kritische Spannung an. Um die Energie so abführen zu können, daß die nichtlinearen Widerstände 10,11,12 nicht zerstört werden, sind an den Knotenpunkten K1,K2,K3 jeweils zwei weitere nichtlineare Widerstände in Reihe mit einer Verzögerungsleitung L10,L11,L20, L21,L30,L31 parallel geschaltet. Beispielsweise liegen damit am Knotenpunkt K2 nicht nur der nichtlineare Widerstand 11 sondern auch die beiden Verzögerungsleitungen L20 und L21, die über die Punkte b1,b2 zu den weiteren, geerdeten nichtlinearen Widerständen 21,31 führen.

Die Zahl der jeweils zum primären nichtlinearen Widerstand 10, 11 oder 12 einer Crossbonding-Beschaltung hinzugeschaltenen nichtlinearen Widerstände (20,21,22,30,31,32) und deren zugehörige Leitungen (L10,L20,L30,L11,L21,L31) ist in Fig. 1 nur beispielhaft mit je zwei dargestellt. Je nach Auslegung der Schaltungsanordnung können an einem Knotenpunkt K1,K2,K3 auch nur ein weiterer nichtlinearer Widerstand mit zugehöriger Verzögerungsleitung aber auch mehr als zwei nichtlineare Widerstände mit Leitung liegen.

In Fig. 2 ist die Energieaufnahme E der nichtlinearen Widerstände an einem Knotenpunkt aus einer rechnerischen Simulation dargestellt. Vorausgeschickt wird noch, daß maximale Energieaufnahmen von nichtlinearen Widerständen in der Größenordnung von 30 kWs liegen. Bei der Simulation wurde ein Kondensator mit einer Ladespannung von 500 kV gewählt, der nach 80 Mikrosekunden entladen ist, falls er an den primären nichtlinearen Widerstand geschaltet wird, ein primärer nichtlinearen Widerstand (10) mit 11 kV und zwei sekundäre nichtlineare Widerstände (20, 30) mit 9 kV Spannungsbegrenzung. Die sekundären Widerstände (20,30) liegen mit je einer Verzögerungsleitung (L10,L11) von 3 Meter Länge am Knotenpunkt (K1). Dargestellt in der Fig. 2 ist die Energieaufnahme nach der Entladezeit des Kondensators als Funktion des Wellenwiderstands Z der Leitungen L10,L11. Die Kennlinie 1 gehört zum primären Widerstand 10 und die Kennlinien 2 und 3 gehören zu den beiden Widerständen 20 und 30 der Verzögerungsleitungen L10, L11.

Aus der Fig. 2 ist zu entnehmen, daß die Wellenwiderstände Z der Verzögerungsleitungen einen großen Einfluß auf die Energieumlenkung haben. Je mehr Energie vom primären Widerstand 10 ferngehalten werden soll, desto kleiner müssen die Wellenwiderstände der Verzögerungsleitungen L10,L11 sein. Soll also die Energieaufnahme des Widerstands 10 30 kWs nicht überschreiten, muß der Wellenwiderstand der Verzögerungsleitung zu etwa 100 Ohm (oder kleiner) gewählt werden.

Eine der Fig. 2 entsprechende Berechnung der Energieaufnahme in Abhängigkeit der Länge der Verzögerungsleitung liefert einen ähnlichen Sachverhalt. So würde bei einem Wellenwiderstand von 100 Ohm der Verzögerungsleitungen L10,L11 die Energieaufnahme des primären Widerstands 10 unter 30 kWs begrenzt bleiben, wenn die Länge der Leitungen L10,L11 kleiner oder gleich 3 Meter gewählt werden würde.

## Patentansprüche

1. Schaltungsanordnung für ein Hochspannungsdrehstromkabel bestehend aus Einleiterkabeln, deren Mäntel oder Schirme (1,2,3,1',2',3') an mindestens einem Punkt (K0) ihrer Längen geerdet und an mindestens einem weiteren Punkt (K1,K2,K3), hier 'Knotenpunkt' genannt, untereinander verbunden und über spannungsbegrenzende Bauelemente (10,11,12) geerdet sind, **dadurch gekennzeichnet**,
daß in jedem Knotenpunkt (K1,K2,K3) mindestens ein weiteres spannungsbegrenzendes Bauelement (20,21,22) in Reihe mit einem Verzögerungsglied (L10,L20,L30) gegen Masse geschaltet ist.

2. Schaltungsanordnung nach Anspruch 1, **dadurch gekennzeichnet**, daß das Verzögerungsglied (L10,L20,L30) am Knotenpunkt (K1,K2,K3) und das spannungsbegrenzende Bauelement (20,21,22) in Reihe dahinter liegt.

3. Schaltungsanordnung nach einem der Ansprüche 1 oder 2, **dadurch gekennzeichnet**, daß in jedem Knotenpunkt (K1,K2,K3) jeweils mehrere in Reihe mit einem Verzögerungsglied (L10,L20,L30) liegende, spannungsbegrenzende Bauelemente (20,30,21,31,22,32) gegen Masse geschaltet sind, wobei die Ansprechspannung der weiteren spannungsbegrenzenden Bauelemente (20,30,21,31,22,32) kleiner ist als die des primären spannungsbegrenzenden Bauelements (10,11,12).

## Claims

1. A circuit arrangement for a high-voltage three-phase cable comprising single-conductor cables, the jackets or sheaths (1, 2, 3, 1', 2', 3') of which are earthed at at least one point (**K0**) along their lengths and are connected to one another at at least one further point (**K1, K2, K3**), referred to as a "junction point" here, and are earthed by way of voltage-limiting components (**10, 11, 12**), **characterized in that** at each junction point (K**1, K2, K3**) at least one further voltage-limiting component (20, 21, 22) is connected to earth in series with a delay element (**L10, L20, L30**).

2. A circuit arrangement according to Claim 1, **characterized in that** the delay element (**L10, L20, L30**) [is connected] to the junction point (**K1, K2, K3**) and the voltage-limiting component (20, 21, 22) is arranged in series behind it.

3. A circuit arrangement according to one of Claims 1 [and] 2, **characterized in that** at each junction point (**K1, K2, K3**) a plurality of voltage-limiting components (20, 30, 21, 31, 22, 32) arranged in series with a delay element (**L10, L20, L30**) are connected to earth in each case, wherein the minimum operating voltage of the further voltage-limiting components (20, 30, 21, 31, 22, 32) is less than that of the primary voltage-limiting component (10, 11, 12).

## Revendications

1. Agencement de circuit pour un câble à courant triphasé haute tension, comprenant des câbles monoconducteurs dont les enveloppes ou blindages (1, 2, 3, 1', 2', 3') sont mis à la terre par au moins un point (KO) de leur longueur et reliés entre eux par au moins un autre point (K1, K2, K3), appelé ici "point nodal", et mis à la terre par l'intermédiaire d'éléments (10, 11, 12) limiteurs de tension, caractérisé en ce qu'à chaque point de connexion (K1, K2, K3) au moins un autre élément (20, 21, 22) limiteur de tension est mis à la masse, couplé en série avec un élément de temporisation (L10, L20, L30).

2. Agencement de circuit selon la revendication 1, caractérisé en ce que l'élément de temporisation (L10, L20, L30) est raccordé au point nodal (K1, K2, K3) et l'élément (20, 21, 22) limiteur de tension en série en aval de celui-ci.

3. Agencement de circuit selon l'une des revendications 1 ou 2, caractérisé en ce qu'à chaque point nodal (K1, K2, K3) plusieurs éléments (20, 30, 21, 31, 22, 32) limiteurs de tension montés en série avec respectivement un élément de temporisation (L10, L20, L30) sont mis à la masse, la tension de réponse des autres éléments (20, 30, 21, 31, 22, 32) limiteurs de tension étant inférieure à celle de l'élément (10, 11, 12) limiteur de tension primaire.
